# DEMANDE DE BREVET EUROPEEN

(11) **EP 4 195 429 A1**
(43) Date de publication de la demande: **14.06.2023**
(21) Numéro de dépôt: 22210635.3
(22) Date de dépôt: 30.11.2022
(51) Int. Cl.: H02G 1/14, H02G 15/18

(54) **OUTIL DE TRANSFERT SUR UN CÂBLE ÉLECTRIQUE D'UNE PIÈCE EXPANSÉE PORTÉE PAR UN TUBE ET PROCÉDÉ ASSOCIÉ**

(30) Priorité: 09.12.2021 FR 2113181
(71) Demandeur: Nexans, 92400 Courbevoie (FR)
(72) Inventeur: SOUSA, Marcel, 08350 Donchery (FR)
(74) Mandataire: Ipsilon

(57) **Abrégé**

Cet outil (10) pour mettre en place sur un câble électrique une pièce expansée portée par au moins un tube comporte : une première bague (12) composée de deux demi-bagues (121, 122) articulées l'une par rapport à l'autre, la première bague (12) présentant sur sa circonférence au moins un premier orifice lamé ; une seconde bague (14) composée de deux demi-bagues (141, 142) articulées l'une par rapport à l'autre, la seconde bague (14) présentant sur sa circonférence au moins un second orifice taraudé ; une tige filetée (20) traversant la première (12) et venant se loger dans la seconde bague (14) par les premier et second orifices en regard, les première et seconde bagues (12, 14) étant adaptées à s'éloigner l'une de l'autre lors du vissage de la tige filetée (20), de façon à transférer de l'au moins un tube vers le câble la pièce expansée.

## Description

La présente invention se rapporte à un outil de transfert sur un câble électrique d'une pièce expansée portée par un tube, ainsi qu'à un procédé associé.

L'invention appartient au domaine des outils en rapport avec les câbles électriques.

Pour transférer sur des câbles électriques une ou plusieurs pièces expansées portées par des tubes supports, il est généralement nécessaire d'utiliser un outil supplémentaire composé d'une ou plusieurs pièces.

La plupart du temps, cet outil est à usage unique, peut être encombrant et son utilisation peut requérir une certaine force physique.

La présente invention a pour but de remédier aux inconvénients précités de l'art antérieur.

Dans ce but, la présente invention propose un outil pour mettre en place sur un câble électrique une pièce expansée portée par au moins un tube, remarquable en ce qu'il comporte :
une première bague composée de deux demi-bagues articulées l'une par rapport à l'autre, la première bague présentant sur sa circonférence au moins un premier orifice lamé ;
une seconde bague composée de deux demi-bagues articulées l'une par rapport à l'autre, la seconde bague présentant sur sa circonférence au moins un second orifice taraudé ;
une tige filetée traversant la première bague et venant se loger dans la seconde bague par les premier et second orifices, les première et seconde bagues étant adaptées à s'éloigner l'une de l'autre lors du vissage de la tige filetée, de façon à transférer de l'au moins un tube vers le câble la pièce expansée.

Ainsi, l'invention propose un outil à impact environnemental réduit car réutilisable, qui est en outre compact, robuste et d'utilisation ergonomique, permettant ainsi une installation sans effort, rapide et facile. En outre, cet outil permet d'éviter une mauvaise installation ou une détérioration de la pièce expansée lors du transfert et offre une meilleure répétabilité de l'installation, quel que soit le monteur. Par ailleurs, de par son caractère compact, il permet de réduire la longueur du tube support de la pièce expansée, ce qui réduit le coût du tube ainsi que le conditionnement et le poids du transport.

Dans un mode particulier de réalisation, la tige filetée est une vis trapézoïdale ou à billes.

Cela permet de transmettre des efforts importants et précis. Cela permet également d'avoir un mouvement beaucoup plus rapide qu'avec une tige filetée classique. En effet, l'avance axiale pour un tour est fonction du pas de la vis multiplié par le nombre de filets qu'elle comporte.

Dans un mode particulier de réalisation, l'épaisseur totale des première et seconde bagues superposées ne dépasse pas 25 mm.

Cela contribue au caractère compact de l'outil.

Dans le même but que celui indiqué plus haut, la présente invention propose également un procédé de mise en place sur un câble électrique d'une pièce expansée portée par au moins un tube au moyen d'un outil tel que succinctement décrit ci-dessus, remarquable en ce qu'il comporte des étapes consistant à :
mettre en place l'au moins un tube portant la pièce expansée autour du câble électrique ;
ouvrir les première et seconde bagues en écartant l'une de l'autre leurs deux demi-bagues articulées respectives ;
positionner les première et seconde bagues ouvertes sur l'au moins un tube et fermer les première et seconde bagues sur l'au moins un tube ;
visser la tige filetée avec un moyen de vissage, de façon à éloigner les première et seconde bagues l'une de l'autre afin de transférer de l'au moins un tube vers le câble la pièce expansée ;
ouvrir les première et seconde bagues en écartant l'une de l'autre leurs deux demi-bagues articulées respectives ;
ôter l'au moins un tube du câble.

Dans un mode particulier de réalisation, le moyen de vissage est une visseuse portative électrique à chocs.

Cela permet d'utiliser pour l'étape de vissage le même moyen que celui utilisé pour visser les raccords mécaniques des câbles et d'atteindre de grands couples.

Dans un mode particulier de réalisation, la pièce expansée est un manchon rétractable à froid d'une jonction de câble.

L'invention s'applique en effet à tous les produits rétractables à froid.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue schématique en perspective d'un outil conforme à la présente invention, en position fermée, dans un mode particulier de réalisation.
[Fig. 2] est une vue schématique en perspective d'un outil conforme à la présente invention, en position ouverte, dans un mode particulier de réalisation.
[Fig. 3], [Fig. 4] et [Fig. 5] sont des séries de vues schématiques illustrant les principales étapes d'un procédé conforme à la présente invention pour mettre en place sur un câble électrique une pièce expansée portée par un tube au moyen d'un outil conforme à la présente invention, dans un mode particulier de réalisation.
[Fig. 6] est une série de vues schématiques illustrant le déroulement de l'une des étapes du procédé conforme à la présente invention lorsque la pièce expansée est portée par deux tubes, dans un mode particulier de réalisation.

### Description de mode(s) de réalisation

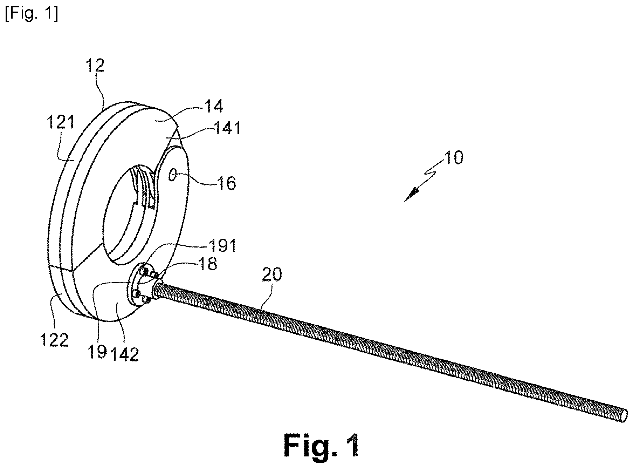

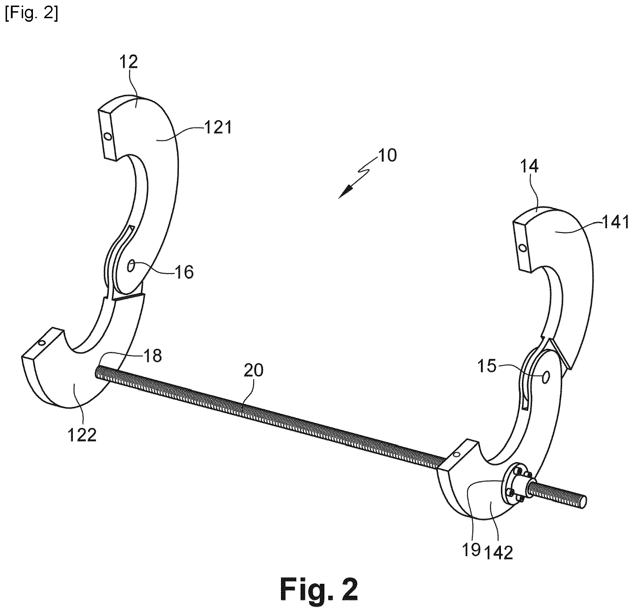

Comme le montrent les figures 1 et 2, un outil 10 conforme à la présente invention, pour mettre en place sur un câble électrique une pièce expansée portée par un ou plusieurs tubes, comporte une première bague 12 et une seconde bague 14 identique à la première bague 12.

A titre d'exemple nullement limitatif, la pièce expansée peut être une jonction rétractable à froid.

Chacune des première et seconde bagues 12, 14 est composée de deux demi-bagues articulées l'une par rapport à l'autre suivant une articulation 16. Les demi-bagues de la bague 12 sont respectivement désignées par les références 121 et 122 et les demi-bagues de la bague 14 sont respectivement désignées par les références 141 et 142. Dans un mode particulier de réalisation, les demi-bagues 122 et 141 sont identiques, ainsi que les demi-bagues 121 et 142.

En outre, la première bague 12 présente sur sa circonférence un ou plusieurs orifices lamés 18 et la seconde bague 14 présente sur sa circonférence un ou plusieurs orifices taraudés 19. Ces orifices 18, 19 sont positionnés de façon identique sur la circonférence des première et seconde bagues 12, 14, de sorte que lorsque les première et seconde bagues 12, 14 sont superposées, leurs orifices 18, 19 respectifs sont mutuellement en regard.

De façon optionnelle, à l'endroit du ou des orifices 18, 19, l'une des bagues 12, 14 ou les deux bagues 12 et 14 peuvent être pourvues d'une pièce standard de renforcement permettant un guidage plus long, par exemple un écrou à embase, cette pièce de renforcement étant fixée sur la ou les bagues concernées, par exemple au moyen de plusieurs vis 191.

L'outil 10 est compact. A titre d'exemple non limitatif, on peut prévoir que l'épaisseur totale des première et seconde bagues 12, 14 superposées ne dépasse pas 25 mm. Cette épaisseur totale est par exemple de 23 mm.

Dans le mode particulier de réalisation illustré, les première et seconde bagues 12, 14 présentent chacune un seul orifice 18, 19, situé à égale distance des deux extrémités de la demi-bague 122 sur la première bague 12 et situé à égale distance des deux extrémités de la demi-bague 142 sur la seconde bague 14.

L'outil 10 comporte en outre une tige filetée 20, qui traverse la première bague 12 et vient se loger dans la seconde bague 14 par l'un des orifices lamés 18 de la première bague 12 et l'orifice taraudé 19 correspondant de la seconde bague 14. La tige filetée 20 est avantageusement une vis trapézoïdale ou à billes. Le vissage de la tige filetée 20 a pour effet d'éloigner l'une de l'autre les première et seconde bagues 12, 14, de façon à transférer une pièce expansée de son tube support vers le câble électrique sur lequel cette pièce expansée doit être installée. Cette opération est décrite plus en détail ci-après dans un exemple non limitatif où la pièce expansée est un manchon rétractable à froid d'une jonction de câble.

De façon optionnelle, la tige filetée 20 peut être logée dans un roulement dans la ou les bagues 12, 14.

Dans un mode particulier de réalisation, les première et seconde bagues 12, 14 peuvent être reliées par une colonne de guidage, permettant d'améliorer le guidage et de solidariser l'ensemble. La fermeture et l'ouverture des bagues sont rapides et faciles et peuvent, dans un mode particulier de réalisation, être réalisées par un aimant ou une grenouillère.

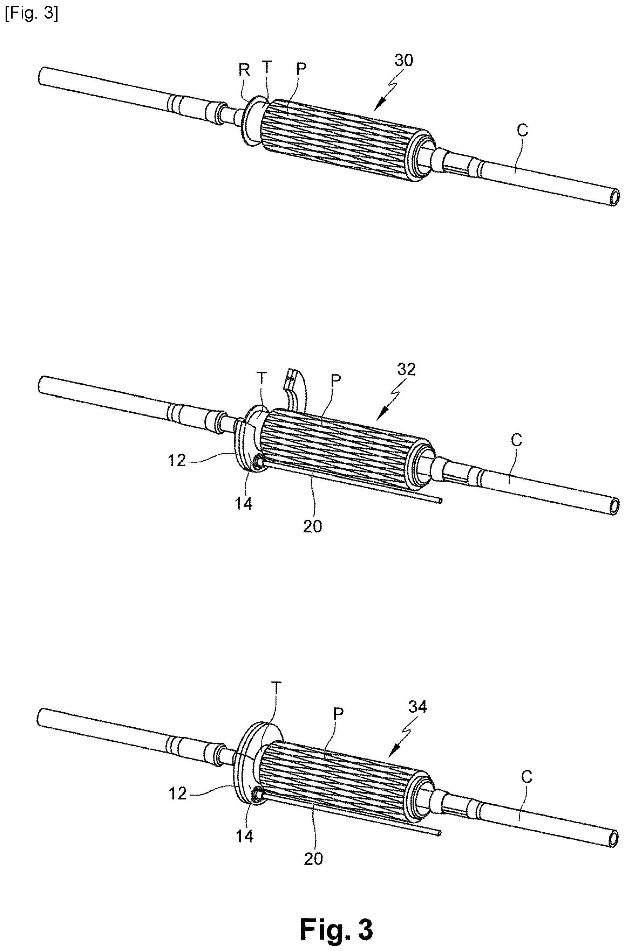

Comme le montre la figure 3, une première étape 30 du procédé conforme à l'invention, pour mettre en place sur un câble électrique C une pièce expansée P portée par au moins un tube T au moyen de l'outil 10, consiste à mettre en place sur le câble C le ou les tubes T support portant la pièce expansée P à installer sur ce câble C.

Puis une étape 32 consiste à ouvrir les première et seconde bagues 12, 14 en écartant l'une de l'autre leurs deux demi-bagues articulées respectives 121, 122, 141, 142.

Ensuite, une étape 34 consiste à positionner les première et seconde bagues 12, 14 ouvertes sur le ou les tube(s) T et à les fermer sur ce ou ces tube(s) T.

Puis une étape 36 consiste à visser la tige filetée 20 avec un moyen de vissage 37, de façon à éloigner lesdites première et seconde bagues 12, 14 l'une de l'autre afin de transférer du ou des tube(s) T vers le câble C la pièce expansée P. En effet, la progression d'une des bagues 12, 14 sur la tige filetée 20 pousse peu à peu la pièce expansée P le long du ou des tube(s) T pour la translater sur le câble C.

A titre d'exemple non limitatif, le moyen de vissage 37 peut être une visseuse portative électrique à chocs.

Dans un mode particulier de réalisation, les bagues 12, 14 s'adaptent au diamètre du ou des tube(s) T.

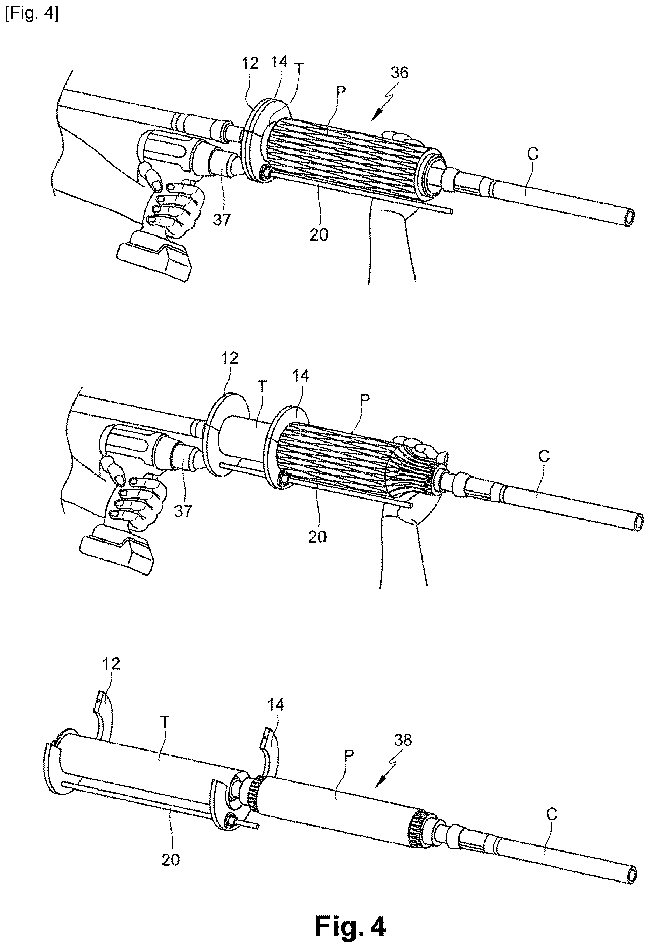

Après l'étape 36, une fois la pièce expansée P entièrement transférée du ou des tube(s) T vers le câble C, comme le montre la figure 4, une étape 38 consiste à ouvrir à nouveau les première et seconde bagues 12, 14, en écartant l'une de l'autre leurs deux demi-bagues articulées respectives 121, 122, 141, 142.

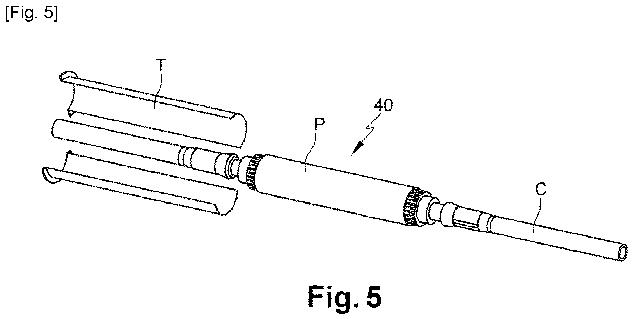

Enfin, comme le montre la figure 5, une dernière étape 40 consiste à ôter le ou les tube(s) T du câble C. Dans le mode particulier de réalisation illustré sur les figures 3 à 5, il y a un seul tube support T, formé de deux demi-tubes.

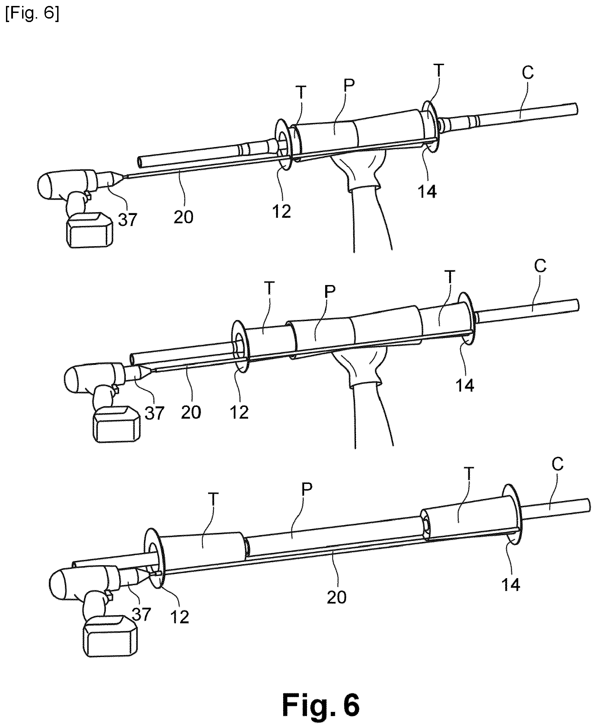

La figure 6 montre le déroulement de l'étape 36 de vissage lorsque la pièce expansée est portée par deux tubes support T.

Avant le début du vissage, les première et seconde bagues 12, 14 sont positionnées aux extrémités opposées des tubes T. Ces extrémités sont pourvues d'un rebord R (visible plus clairement sur la figure 3) sensiblement plat dont le diamètre excède le diamètre intérieur des bagues 12, 14 et les bagues 12, 14 sont placées sur les tubes T contre ces rebords R.

Le vissage éloigne les première et seconde bagues 12, 14 l'une de l'autre et éloigne donc également les deux tubes T l'un de l'autre tout en transférant peu à peu la pièce expansée P sur le câble C.

## Revendications

1. Outil (10) pour mettre en place sur un câble électrique (C) une pièce expansée (P) portée par au moins un tube (T), **caractérisé en ce qu'**il comporte :
une première bague (12) composée de deux demi-bagues (121, 122) articulées l'une par rapport à l'autre, ladite première bague (12) présentant sur sa circonférence au moins un premier orifice lamé (18) ;
une seconde bague (14) composée de deux demi-bagues (141, 142) articulées l'une par rapport à l'autre, ladite seconde bague (14) présentant sur sa circonférence au moins un second orifice taraudé (18) ;
une tige filetée (20) traversant ladite première bague (12) et venant se loger dans ladite seconde bague (14) par lesdits premier et second orifices (18, 19), lesdites première et seconde bagues (12, 14) étant adaptées à être positionnées sur ledit au moins un tube (T) et à s'éloigner l'une de l'autre lors du vissage de ladite tige filetée (20), de façon à transférer dudit au moins un tube (T) vers ledit câble (C) ladite pièce expansée (P).

2. Outil (10) selon la revendication 1, **caractérisé en ce que** ladite tige filetée (20) est une vis trapézoïdale ou à billes.

3. Outil (10) selon la revendication 1 ou 2, **caractérisé en ce que** l'épaisseur totale des première et seconde bagues (12, 14) superposées ne dépasse pas 25 mm.

4. Procédé de mise en place sur un câble électrique (C) d'une pièce expansée (P) portée par au moins un tube (T) au moyen d'un outil (10) selon la revendication 1, 2 ou 3, **caractérisé en ce qu'**il comporte des étapes consistant à :
mettre en place (30) ledit au moins un tube (T) portant ladite pièce expansée (P) autour dudit câble électrique (C) ;
ouvrir (32) lesdites première et seconde bagues (12, 14) en écartant l'une de l'autre leurs deux demi-bagues (121, 122, 141, 142) articulées respectives ;
positionner (34) lesdites première et seconde bagues (12, 14) ouvertes sur ledit au moins un tube (T) et fermer lesdites première et seconde bagues (12, 14) sur ledit au moins un tube (T) ;
visser (36) ladite tige filetée (20) avec un moyen de vissage (37), de façon à éloigner lesdites première et seconde bagues (12, 14) l'une de l'autre afin de transférer dudit au moins un tube (T) vers ledit câble (C) ladite pièce expansée(P) ;
ouvrir (38) lesdites première et seconde bagues (12, 14) en écartant l'une de l'autre leurs deux demi-bagues (121, 122, 141, 142) articulées respectives ; ôter (40) ledit au moins un tube (T) dudit câble (C).

5. Procédé selon la revendication 4, **caractérisé en ce que** ledit moyen de vissage (37) est une visseuse portative électrique à chocs.

6. Procédé selon la revendication 4 ou 5, **caractérisé en ce que** ladite pièce expansée (P) est un manchon rétractable à froid d'une jonction de câble.
